# EUROPEAN PATENT SPECIFICATION

(11) **EP 0 709 284 B1**
(45) Date of publication and mention of the grant of the patent: **16.02.2000**
(21) Application number: 95307495.2
(22) Date of filing: 20.10.1995
(51) Int. Cl.: B62L 3/02

(54) **A brake operating device for bicycles**
Bremssteuervorrichtung für Fahrräder
Dispositif de commande de frein pour bicyclettes

(30) Priority: 25.10.1994 JP 26012894
(43) Date of publication of application: 01.05.1996
(73) Proprietor: Shimano Inc., Osaka 590-77 (JP)
(72) Inventor: Okajima, Shinpei, Sakai-shi, Osaka (JP); Sugimoto, Masanori, Sakai-shi, Osaka (JP); Yamasita, Kazuhisa, Sakai-shi, Osaka (JP)
(74) Representative: Pacitti, Pierpaolo A.M.E.

(56) References cited:
- DE-A- 3 713 100
- DE-A- 3 923 176

## Description

### BACKGROUND OF THE INVENTION

The present invention is directed to braking devices for bicycles and, more particularly, to a brake operating device which is constructed so that the operating force of the brake lever can be varied as the brake lever is pulled.

Such a brake operating device is known, for example, from the disclosure in Japanese Laid-Open Patent Application 5-16865 and is shown in Figure 9 herein. As shown in Figure 9, a brake lever **3** is rotatably pivoted via a pivot shaft **32** on a bracket **2** fixed to a handlebar **1**, and a coil spring **34** that is free at one end is attached via a bolt **33** to this bracket **2**. When the brake lever **3** is pulled, the lug **35** that projects out from the brake lever **3** comes into contact with the free end of the coil spring **34** after rotation of a specific stroke.

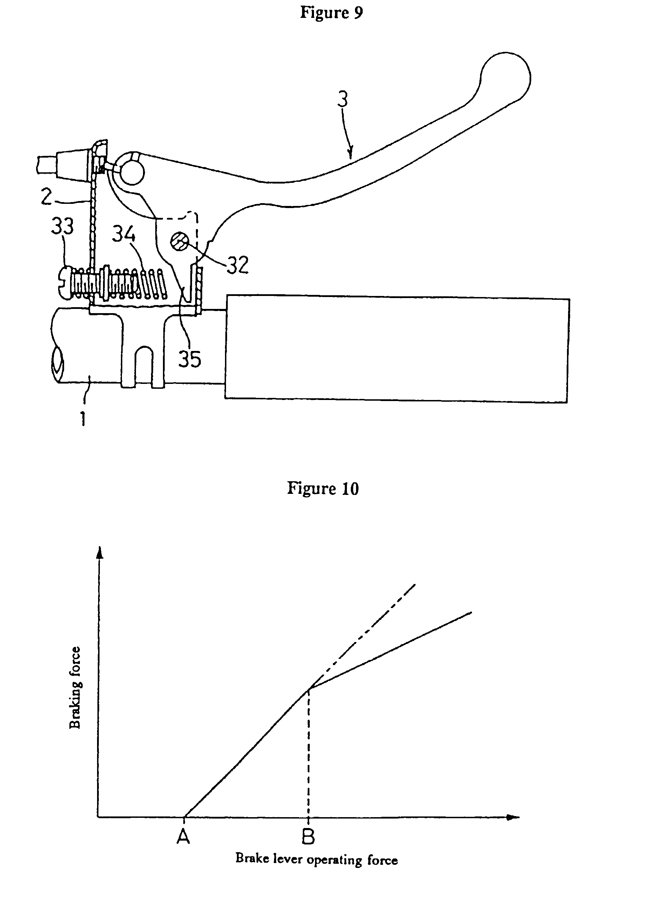

As shown in Figure 10, when the brake lever **3** of this type of brake operating device is pulled by a specific stroke until the lug **35** reaches the operation point **B** where it comes into contact with the coil spring **34**, the operating resistance thereafter increases, with considerable operating force being required, so the cyclist can ascertain the operation stroke by feel. Also, this device is designed such that the location of the operation point **B** can be adjusted with the bolt **33**.

Unfortunately, with a brake device in which this conventional brake lever is used, as shown in Figure 10, the slope gradient of the operating force of the brake lever **3** with respect to the braking force is merely varied before and after the operation point **B** at which the lug **35** of the brake lever **3** comes into contact with the coil spring **34**, so this device cannot deal with all possible situations that may arise, and there is room for improvement on this point For example, under normal conditions the operating stroke of the brake lever can be ascertained by feel, but when confronted with an emergency a cyclist will often unconsciously squeeze the brake lever very hard and may not notice the change in resistance and may not apply the brake efficiently.

### SUMMARY OF THE INVENTION

The present invention is directed to a brake operating device wherein the brake operating resistance is more noticeable and can be adjusted to accommodate different riders.

In one embodiment of the present invention, a brake lever is pivotally mounted to a mounting member, a resistance means is disposed between the brake lever and the mounting member for discretely increasing resistance to movement of the brake lever when the brake lever moves to a particular position so that further movement of the brake lever is inhibited until a force is applied to the brake lever, and a setting means is provided for setting the particular position of the brake lever at which the resistance discretely increases. In a more specific embodiment, a pivot member is pivotally coupled to the brake lever at a first location and to the mounting member at a second location, a stopper is disposed between the pivot member and the brake lever, and a portion of the brake lever contacts the stopper when the brake lever pivots about the first location for discretely increasing the resistance. The stopper is movably mounted relative to the portion of the brake lever and includes a contact surface which varies in shape so that the portion of the brake lever contacts the contact surface at different positions depending upon the relative position of the stopper.

In a further specific embodiment of the present invention, the brake lever is mounted to the mounting member at a mounting location and is adapted both to pivot about the mounting location and to move relative to the mounting location. In this embodiment, a stopper is located so that the brake lever pivots about the mounting location until a portion of the brake lever contacts the stopper, and thereafter the lever pivots about the point of contact between the portion of the brake lever and the stopper.

In yet another embodiment of the present invention, the resistance means comprises a stepped surface and an engaging member which moves along the stepped surface as the brake lever is moved so that a step resists further movement of the brake lever. In this embodiment, the brake lever is pivotally coupled to the mounting member at a mounting location so that a grip part of the brake lever extends from the mounting location and an extension part forming a first cam surface radially extends from the mounting location. The stepped surface is disposed on the extension part of the brake lever. The setting means comprises a cam member pivotally mounted relative to the extension part and having a second cam surface which extends further than the first cam surface for forming the step. Thus, the position of the cam member determines the position of the step and thereby the particular position of the brake lever at which the resistance discretely increases.

### BRIEF DESCRIPTION OF THE DRAWINGS

Figure 1 is a partially cut-away plan view illustrating a particular embodiment of a brake operating device according to the present invention;
Figure 2 is a partially cut-away plan view of the brake operating device of Figure 1 showing the operation of the brake operating device;
Figure 3 is a side cross-sectional view of the brake operating device shown in Figure 1;
Figure 4 is a graph of the braking performance of the brake operating device shown in Figure 1;
Figure 5 is a graph of a selected braking performance of the brake operating device shown in Figure 1;
Figure 6 is a graph of another selected braking performance of the brake operating device shown in Figure 1;
Figure 7 is a partially cut-away view illustrating an alternative embodiment of a brake operating device according to the present invention;
Figure 8 is a partially cut-away view illustrating another alternative embodiment of a brake operating device according to the present invention;
Figure 9 is a partially cut-away view illustrating a known brake operating device; and
Figure 10 is a graph of the braking performance of the brake operating device shown in Figure 9.

### DETAILED DESCRIPTION OF THE EMBODIMENTS

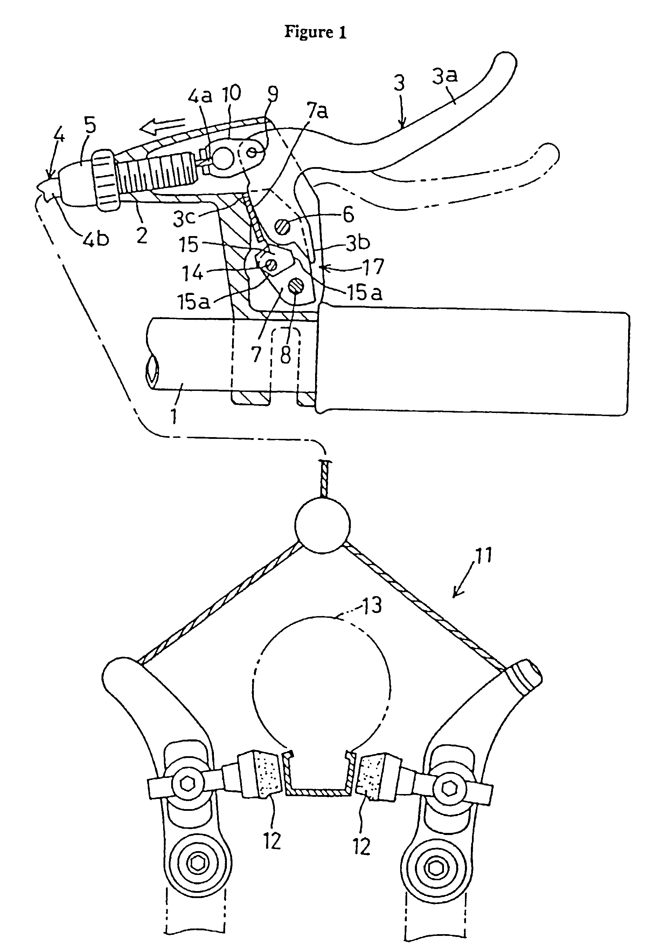

Figures 1-3 show a first embodiment of a brake operating device according to the present invention. As shown therein, a brake operating device, which is fixed to the handlebar **1** of a bicycle (not shown), comprises a bracket **2** which is used to fix the brake operating device to the handlebar **1** and a brake lever **3** attached to bracket **2.** An attachment fitting **5** that supports the outer cable **4a** of a brake cable **4** is threaded onto the bracket **2**.

The brake lever **3** is not pivotally supported directly on the bracket **2,** but rather is rotatably and pivotally linked to a pivot member **7** via a first pivot shaft **6**, and this pivot member **7** is rotatably and pivotally linked to the bracket **2** via a second pivot shaft **8**. A through hole **9** that acts as a linking component in order to link the inner cable **4a** of the brake cable **4** is made in the brake lever **3** portion on the grip **3a** side of the brake lever **3** away from the first pivot shaft **6** and on the opposite side from the second pivot shaft **8** with this first pivot shaft **6** at the center. The inner cable **4a** is linked to the through hole **9** of the brake lever **3** via an attachment fitting **10**, and the other end of the inner cable **4a** is linked to an ordinary cantilever brake **11**. As will be discussed below, when the grip **3a** of the brake lever **3** is gripped and the brake lever **3** pulled, the brake shoes **12** of the cantilever brake **11** press against both sides of the rim of the rear wheel **13**, thus applying the brakes to this rear wheel **13.** When the brake lever **3** is released, just as with a conventional brake device, the return spring (not shown) provided on the cantilever brake **11** causes the brake lever **3** to spring back to its original position.

A rotating shaft **14** is rotatably attached to that portion of the pivot member **7** that is between the first pivot shaft **6** and the second pivot shaft **8,** and to this rotating shaft **14** are fixed a stopper member **15**, which has a plurality of contact surfaces **15a** around it, and a gear **16.** The brake lever **3** is integrally provided with a lug member **3b** that projects out toward the stopper member **15** side. When the brake lever **3** is rotated a specific angle around the first pivot shaft **6**, this lug member **3b** comes into contact with one of the contact surfaces **15a** of the stopper member **15**, which temporarily prevents the brake lever **3** from rotating any further.

The second pivot shaft **8** is rotatably supported by the bracket **2**, and to this second pivot shaft **8** is fixed another gear **18** that engages with the gear **16** of the first pivot shaft **6**. A knob-like operating component **19** is attached to the portion of second pivot shaft **8** that sticks out of the bracket **2**. When this operating component **19** is rotated, the rotating shaft **14** is rotated via the two gears **16** and **18**, the stopper member **15** fixed to this rotating shaft **14** is rotated, and the contact surface **15a** with which the lug member **3b** of the brake lever **3** comes into contact can be freely selected.

The action of the brake device in this embodiment will now be described. The inner cable **4a** of the brake cable **4** is usually pulled in the direction of the arrow shown in Figure 1 by the return spring ordinarily provided on the cantilever brake **11**. As a result, the brake lever **3** rotates in the counterclockwise direction of Figure 1 centered around the first pivot shaft **6**, but the contact surface **3c** of the brake lever **3** comes into contact with the inner surface **7a** of the pivot member **7**, which has a U-shaped cross sectional shape, and the outer surface **7b** of this pivot member **7** comes into contact a movement blocking surface **2a** provided to the bracket **2**, so the state shown in Figure 1 is usually maintained.

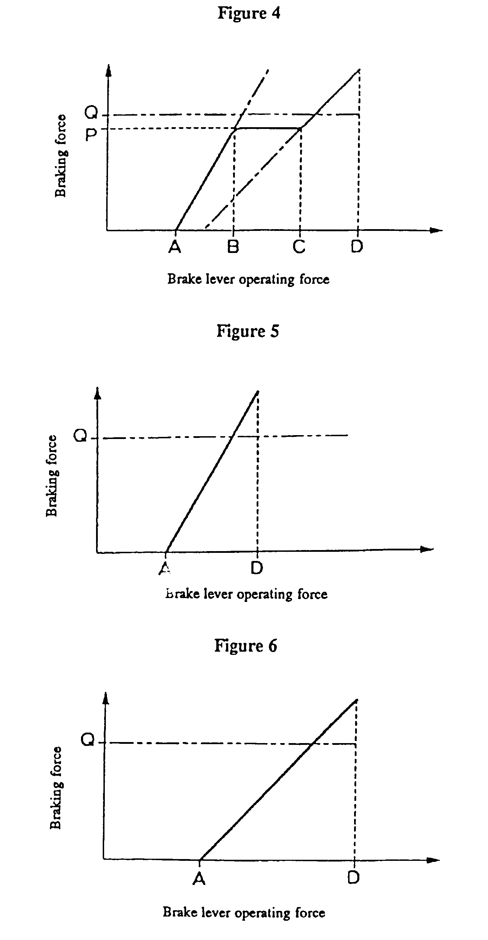

When the grip **3a** of the brake lever **3** is gripped and pulled from this state, the first thing that happens is that the brake lever **3** rotates around the first pivot shaft **6**, the operating force thereof is transmitted to the cantilever brake **11** via the inner cable **4a**, and the brake shoes **12** move toward the rim of the rear wheel **13**. At first, the brake shoes **12** meet no resistance, and almost no operating force is required until they come into contact with the rim. However, as shown in Figure 4, the operating force gradually increases from the operation point A where the brake shoes **12** come into contact with the rim, and the braking force also increases proportionally. When the brake lever **3** is pulled further, the lug member **3b** that projects out from the brake lever **3** comes into contact with one of the contact surfaces **15a** of the stopper member **15**, which is part of the stopper means **17**, and reaches the operation point B shown in Figure 4.

As a result, further rotation of the brake lever **3** around the first pivot shaft **6** is prevented, so the brake lever **3** tries to rotate clockwise around the second pivot shaft **8**. However, since the distance from the second pivot shaft **8** to the inner cable **4a** is greater than the distance from the first pivot shaft **6** to the inner cable **4a**, the rotational moment originating in the tension of the inner cable **4a** increases sharply, so even if an attempt is made to pull the brake lever **3** beyond the operation point **B**, the operating force will merely increase and the brake lever **3** will not rotate, and the braking force will remain at the same level.

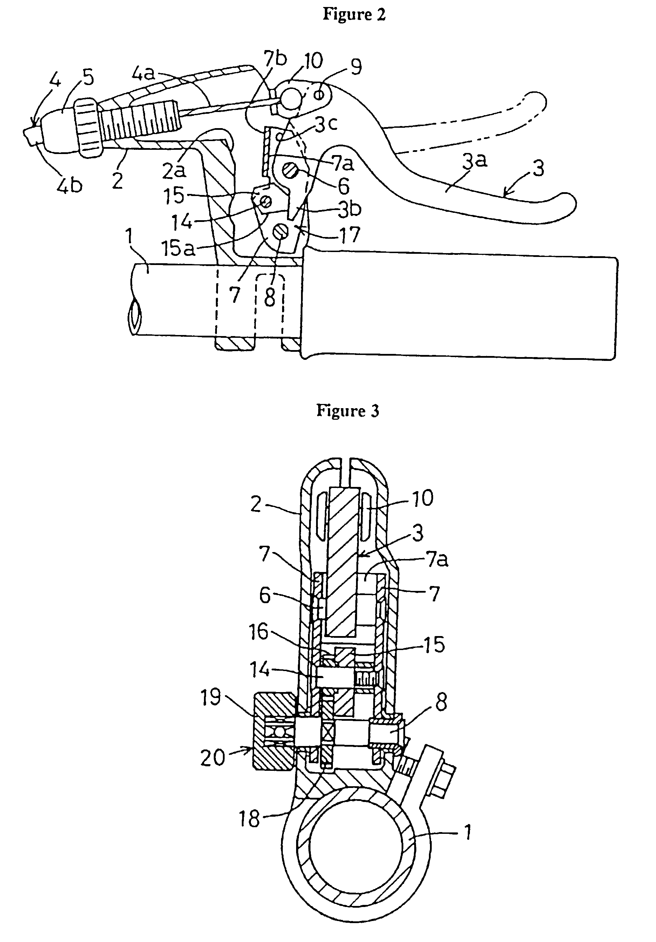

If the operating force is further increased against the brake lever **3** until the operation point **C** is reached, as shown in Figure 2, the brake lever **3** will rotate around the second pivot shaft **8** integrally with the pivot member **7**, and after this resumption of rotation there will also be an increase in the braking force proportional to the increase in operating force until the stroke end **D** is reached.

In other words, when the brake lever **3** is pulled up to the set operation position **B**, at which the braking force on the rear wheel **13** produced by the brake shoes **12** reaches a certain setting, then the action of the stopper means **17** temporarily renders any further increases in braking force impossible. Thereafter, however, if further operating force is applied to the brake lever **3**, it will again become possible to pull the brake lever **3**. That is, the stopper action of the stopper means **17** will be released, and the braking force will increase over the setting **P.**

It is possible to design the system such that if the setting **P** is set somewhat lower than the lock-up braking value **Q** at which the rear wheel locks up, the brake lever **3** can be operated extremely lightly. To be more specific, it is preferable for the operation of the brake lever **3** to be as light as possible, but if it is merely made lighter, the braking force will go over the lock-up braking value **Q** if the brake lever **3** is unconsciously pulled too strongly all at once. With the brake device of the present invention there is a region in which the braking force remains constant at the setting **P** and only the operating force of the brake lever **3** increases, as shown by operation points **B** to **C** in Figure 4. If this setting **P** is set somewhat lower than the lock-up braking value **Q**, then even if the operating force of the brake lever **3** is made much lighter from the operation point **A** to the operation point **B**, for example, the braking force can still be prevented from reaching the lock-up braking value **Q**. Of course, in some cases a braking force over the lock-up braking value **Q** may be desired. In such cases, a fairly high braking force will be needed, but if an operating force over that at the operation point **C** is applied, a braking force over the lock-up braking value **Q** can be reliably obtained.

The lock-up braking value **Q** is affected by the build, and particularly the weight, of the cyclist, and also varies slightly with various riding conditions, such as when going up or down a hill. Thus, the operating component **19**, which is part of the setting changing means **20**, is rotated as needed to change the setting **P** to the desired value. In other words, each of the contact surfaces **15a** of the stopper member **15** that rotates along with the operating component **19** is at a different distance from the center of the rotation shaft **14** thereof, so the contact surfaces **15a** can be selected so as to change the angle of rotation through which the brake lever **3** goes until the lug member **3b** of the brake lever 3 comes into contact with that contact surface **15a**, that is, to change the position of the operation point **B** shown in Figure 4, and change the setting **P** to the desired value.

The contact surface **15a** whose distance from the center of the rotation shaft **14** is the shortest may be set such that the stroke end **D** will be reached before the lug member **3b** comes into contact with this contact surface **15a** when the brake lever **3** is pulled. In this case the braking performance is as shown in Figure 5, with operation points **B** and **C** shown in Figure 4 being absent up to the stroke end **D,** so braking that feels the same as in the past is possible. Furthermore, although not particularly provided in the practical example illustrated in Figures 1 through 3, the distance from the center of the rotation shaft **14** can be lengthened so that a contact surface **15a** with which the lug member **3b** comes into contact is provided from the start of the pulling operation of the brake lever **3**, in which case the braking performance will be as shown in Figure 6, meaning that the braking will feel a little heavier than that in Figure 5.

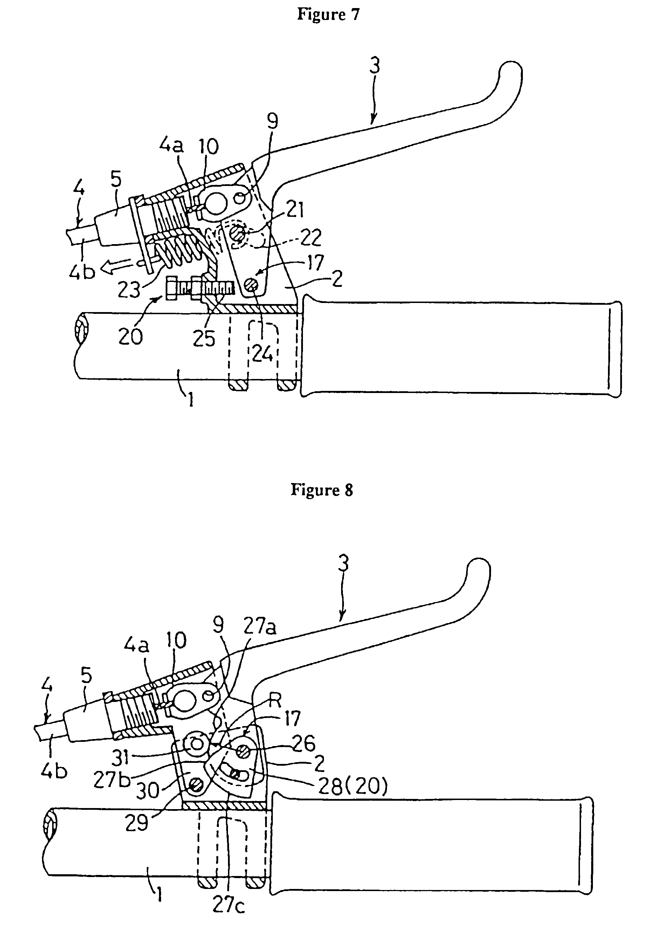

Figure 7 is a partially cut-away view illustrating an alternative embodiment of a brake operating device according to the present invention. Those parts that are the same or have the same action as in the first practical example will be labelled with the same symbols and their detailed description omitted in an effort to avoid redundant description. In this embodiment, the brake lever **3** is directly pivotally supported and on the bracket **2** via a pivot shaft **21**. However, this pivot shaft **21** is encased in a slot **22** made in the bracket **2** and is able to move back and forth in this slot **22**. The pivot shaft **21** is elastically biased in the direction of the arrow in the figure by a coil spring **23** interposed between this pivot shaft **21** and the bracket **2.**

A pin **24** sticks out from the brake lever **3** portion on the opposite side from the attachment fitting **10** of the inner cable **4a** and centered around this pivot shaft **21**. A bolt **25** with which the pin **24** comes into contact is threaded on the bracket **2** side. Thus, the pin **24**, the bolt **25**, etc., make up the stopper means **17**, with the setting changing means **20** comprising the threaded bolt **25**, etc.

In this embodiment, the brake lever **3** rotates around the pivot shaft **21** during the time while the brake shoes **12** go from a state of no resistance to a gradual increase in operating force from the operation point **A** where the brake shoes **12** come into contact with the rim, and the braking force also increases in proportion to the pulling of the brake lever **3.** When the brake lever **3** is further pulled, the pin **24** sticking out from the brake lever **3** comes into contact with the bolt **25** on the bracket **2** side, thus reaching the operation point **B** shown in Figure 4. At this time, further rotation of the brake lever **3** around the pivot shaft **21** is prevented, and the brake lever **3,** which up to now had been rotating around the pivot shaft **21**, suddenly tries to rotate around the pin **24**. By exactly the same action as in the first practical example, even if an attempt is made to pull the brake lever **3** beyond the position of the operation point **B**, the operating force merely increases and the brake lever **3** will not rotate, and the braking force will remain at the same level. When the operating force on the brake lever **3** is further increased and the operation point **C** is reached, the brake lever **3** resumes rotation along the slot **22** together with the pivot shaft **21** and around the pin **24** until the stroke end **D** is reached.

In this embodiment, the setting **P** can be continuously varied and adjusted by adjustment of the bolt **25**, and if the bolt is removed or moved out so as to increase its distance from the pin **24,** the braking performance shown in Figure 5 will result, and if the bolt **25** is moved in and set such that it will come into contact with the pin **24** from the start of the pulling operation of the brake lever **3**, the braking performance shown in Figure 6 can be obtained.

If desired, the position of the operation point **C** can be shifted to the right in Figure 4 if a preload is applied to the coil spring **23** that elastically biases the pivot shaft **21**, and the slope from the operation point **C** to the stroke end **D** can be changed by replacing the coil spring **23** with one having a different elastic force.

Figure 8 is a partially cut-away view illustrating another alternative embodiment of a brake operating device according to the present invention. In this embodiment, brake lever **3** is pivotally linked directly to the bracket **2** via a pivot shaft **26**, but unlike in the second practical example above, this pivot shaft **26** is unable to move relative to the bracket **2**. An arcuate first cam surface **27a** having a constant radius **R** around the pivot shaft **26** is formed integrally with the brake lever **3** at a place on the brake lever **3** near pivot shaft **26**, and an operation member **28** that is rotatable and can be fixed with respect to the brake lever **3** is provided around pivot shaft **26**. This operation member **28** is provided with an involute curve-shaped third cam surface **27c** that has a radial distance longer than the radius **R** of the first cam surface **27a**, with this distance gradually lengthening, and a protruding second cam surface **27b** that links this third cam surface **27c** and the first cam surface **27a** on the brake lever **3** side. The design here is such that a single cam surface that links these three cam surfaces **27a, 27b**, and **27c** is formed.

A swing member **30** is rotatably pivoted by a pivot shaft **29** on the bracket **2**, an outer cable **4b** is attached to the attachment fitting **5** threaded onto this swing member **30**, and the reaction force of this outer cable **4b** biases the swing member **30** to swing around the pivot shaft **29** toward the cam surface side. A roller **31** that is in contact with the cam surface and acts as a cam follower is rotatably pivoted on this swing member **30**, and the stopper means **17** is made up of this roller **31**, the cam surfaces **27a**, **27b**, and **27c**, and so on, while the setting changing means **20** comprises the operation member **28** and so on.

In this embodiment, the roller **31** slides over the first cam surface **27a** during the time while the brake shoes **12** go from a state of no resistance to a gradual increase in operating force from the operation point **A** where the brake shoes **12** come into contact with the rim, so there is no particular swinging of the swing member **30**, and the braking force increases in proportion to the pulling of the brake lever **3**. When the brake lever **3** is further pulled, the cam surface **27b** of the operation member **28**, which rotates integrally with this brake lever **3**, comes into contact with the roller **31**, thus reaching the operation point **B** shown in Figure 4.

Since the reaction of the outer cable **4b** causes a force to act on the swing member **30** that pivots this roller **31** such that it swings toward the cam surface, and since the cam surface **27b** is formed such that it juts sharply outward from the first cam surface **27a**, even if an attempt is made to pull the brake lever **3** beyond the position of this operation point **B**, the operating force will merely increase and the brake lever **3** will not rotate, and the braking force will therefore remain at the same level. When the operating force on the brake lever **3** is further increased and the roller **31** goes over the top of the cam surface **27b**, that is, when the operation point **C** in Figure 4 is reached, the rotation of the brake lever **3** will resume and, at the same time, the third cam surface **27c** will cause the swing member **30** to be forcibly rotated via the roller **31** in the opposite direction from that of the brake lever **3** until the stroke end **D** is reached.

In this embodiment, the setting **P** can be continuously varied and adjusted by changing the fixed position of the operation member **28** with respect to the brake lever **3** and by changing the positions of the cam surface **27b** and the third cam surface **27c** with respect to the first cam surface **27a.** The braking performance shown in Figure 5 will result when the operation member **28** is fixed farther away toward the opposite side of the roller **31**, and the braking performance shown in Figure 6 can be obtained by rotating and fixing the operation member **28** toward the roller **31** side so that the cam surface **27b** will come into contact with the roller **31** from the start of the pulling operation of the brake lever **3**.

While the above is a description of various embodiments of the present invention, further modifications may be employed without departing from the scope of the present invention. For example, the present invention can also be implemented with a band brake, a coaster brake, or various other types of brake. In the described embodiments the stopper means **17** and the setting changing means **20** were provided to the brake lever, but it is also possible to use an ordinary brake lever and provide the stopper means **17** and setting changing means **20** to the brake side of the cantilever brake **11** or the like. In the first embodiment the setting **P** was varied and adjusted in stages by forming a plurality of contact surfaces **15a** around the stopper member **15**, but it is also possible to vary and adjust the setting **P** continuously by using the outside of the stopper member **15** as a continuous contact surface. In the second practical example, the setting **P** can be varied and adjusted in stages by using a rod capable of varying the amount of protrusion in a plurality of stages with respect to the bracket **2** instead of the bolt **25**. In the third practical example the setting **P** can be varied and adjusted in stages by fixing operation members **28** at a plurality of places with respect to the brake lever **3**. Thus, the scope of the invention should not be limited by the specific structures disclosed. Instead, the true scope of the invention should be determined by the following claims. Of course, although labelling symbols are used in the claims in order to facilitate reference to the figures, the present invention is not intended to be limited to the constructions in the appended figures by said labelling.

## Claims

1. A brake operating device for a bicycle comprising:
a brake lever (3) for pivotally mounting to a mounting member (2); resistance means (17), disposed between the brake lever (3) and the mounting member (2), for discretely increasing resistance to movement of the brake lever (3) when the brake lever (3) moves to a predetermined position; and setting means (20) for setting the predetermined position of the brake lever (3) at which the resistance discretely increases, characterised in that further movement of the brake lever (3) is inhibited by the resistance means (17) until a given force (C) is applied to the brake lever (3).

2. A brake operating device as claimed in Claim 1 wherein the resistance means comprises:
a pivot member (7) pivotally coupled to the brake lever (3) at a first location and to the mounting member (2) at a second location;
a stopper (15) disposed between the pivot member and the brake lever (3); and
a portion (3b) of the brake lever (3) for contacting the stopper (15) when the brake lever (3) pivots about the first location.

3. A brake operating device as claimed in Claim 2 wherein the brake lever (3) includes a cable attachment portion (9), and wherein the first location is disposed between the cable attachment portion (9) and the second location.

4. A brake operating device as claimed in either of Claims 2 or 3 wherein the stopper (15) is disposed between the first location and the second location.

5. A brake operating device as claimed in any one of Claims 2 to 4 wherein the stopper (15) is movably mounted relative to the portion (3b) of the brake lever (3) and includes a contact surface (15a) which varies in shape so that the portion (3b) of the brake lever (3) contacts the contact surface (15a) at different positions depending upon the relative position of the stopper (15).

6. A brake operating device as claimed in any of Claims 2 to 5 wherein the setting means (20) comprises an externally disposed operating component (19) coupled to the stopper.

7. A brake operating device as claimed in Claim 6 wherein the stopper (15) is pivotally mounted to the pivot member (7), wherein the operating component (19) is pivotally mounted to the mounting member (2), and wherein the setting means (20) further comprises a first gear (16) mounted to the stopper (15) for rotation therewith and a second gear (18) mounted to the operating component (19) for rotation therewith.

8. A brake operating device as claimed in Claim 7 wherein the first gear (16) meshes directly with the second gear (18).

9. A brake operating device as claimed in Claim 1 wherein the brake lever (3) is mounted to the mounting member (2) at a mounting location (22) and is adapted both to pivot about the mounting location and to move relative to the mounting location, wherein the resistance means (17) includes a stopper (25) and a portion of the brake lever (3) adapted to contact the stopper (25), wherein the stopper (25) is located so that the brake lever (3) pivots about the mounting location until the portion of the brake lever (3) contacts the stopper (25), and thereafter the lever (3) pivots about the point of contact between the portion (3b) of the brake lever (3) and the stopper (5).

10. A brake operating device as claimed in Claim 9 wherein the stopper (25) comprises a threaded rod, and wherein the setting means (20) comprises a threaded portion of the threaded rod.

11. A brake operating device as claimed in either one of Claims 9 or 10 wherein the brake lever (3) includes a cable attachment portion (9), and wherein the mounting location is disposed between the cable attachment portion (9) and the stopper (25).

12. A brake operating device according to Claim 11 wherein a pivot shaft (21) is mounted to the brake lever (3), the pivot shaft (21) being disposed within a slot (22) formed within the mounting member (2) at the mounting location so that the brake lever (3) pivots about the pivot shaft (21) until the portion of the brake lever (3) contacts the stopper (25), and thereafter the pivot shaft (21) moves within the slot (22) .

13. A brake operating device according to either of Claims 11 or 12 further comprising bias means (23) disposed between the brake lever (3), or the pivot shaft (21) attached thereto, and the mounting member (2) for further increasing resistance to movement of the brake lever (3) when the brake lever (3) pivots about the point of contact between the portion of the brake lever (3) and the stopper (25).

14. A brake operating device as claimed in Claim 1 wherein the resistance means comprises:
a stepped surface (27a, 27b, 27c); and
an engaging member (31) which moves along the stepped surface (27a, 27b, 27c) as the brake lever (3) is moved so that a step (27b) resists further movement of the brake lever (3).

15. A brake operating device as claimed in Claim 14 further comprising a movable member (30) movably coupled to the mounting member (2) and supporting the engaging member (31) so that the movable member (30) moves as the engaging member moves along the stepped surface (27a, 27b, 27c).

16. A brake operating device as claimed in either of Claims 14 or 15 wherein the brake lever (3) is pivotally coupled to the mounting member (2) at a mounting location (26) so that a grip part of the brake lever (3) extends from the mounting location (26) and an extension part forming a first cam surface (27a) radially extends from the mounting location (26), and wherein the stepped surface (27a, 27b, 27c) is disposed on the extension part of the brake lever (3).

17. A brake operating device as claimed in Claim 16 wherein the setting means comprises a cam member (28) pivotally mounted relative to the extension part (27a) and having a second cam surface (27c) which extends further than the first cam surface (27a) for forming the step (27b), wherein a position of the cam member (28) determines the position of the step (27b) and thereby the predetermined position of the brake lever (3) at which the resistance discretely increases.

18. A brake operating device as claimed in any preceding Claim wherein the setting means (20) is adapted to set the predetermined position of the brake lever (3) to a location before a braking force is applied to a wheel of the bicycle.

19. A brake operating device as claimed in any preceding Claim wherein the setting means (20) is adapted to set the predetermined position of the brake lever (3) to a location after a braking force equal to a value (Q) at which a wheel of the bicycle locks up.

20. A brake operating device as claimed in any preceding Claim wherein the setting means (20) is adapted to set the predetermined position of the brake lever (3) to a location after a braking force is applied to a wheel of the bicycle but before a braking force equal to a value (Q) at which a wheel of the bicycle locks up is applied.

## Patentansprüche

1. Eine Bremsbetätigungsvorrichtung für ein Fahrrad bestehend aus:
einem drehbar an einem Befestigungsteil (2) zu befestigenden Bremshebel (3); einem zwischen dem Bremshebel (3) und dem Befestigungsteil (2) angebrachten Widerstandsmittel (17), um den Widerstand gegen die Bewegung des Bremshebels (3) leicht zu erhöhen, wenn der Bremshebel (3) zu einer vorgegebenen Position bewegt wird; und einem Einstellmittel (20), um die vorgegebene Position des Bremshebels (3), bei welcher der Widerstand leicht erhöht wird, einzustellen, dadurch gekennzeichnet, daß eine weitere Bewegung des Bremshebels (3) durch das Widerstandsmittel (17) verhindert wird, bis eine gegebene Kraft (C) auf den Bremshebel (3) ausgeübt wird.

2. Bremsbetätigungsvorrichtung gemäß Anspruch 1, wobei das Widerstandsmittel aus folgendem besteht:
einem Drehteil (7), der drehbar bei einer ersten Stelle mit dem Bremshebel (3) und bei einer zweiten Stelle mit dem Befestigungsteil (2) verbunden ist;
einem Ausrücker (15), der zwischen dem Drehteil und dem Bremshebel (3) angebracht ist; und
einem Teil (3b) des Bremshebels (3) zum Berühren des Ausrückers (15), wenn der Bremshebel (3) sich um die erste Stelle dreht.

3. Bremsbetätigungsvorrichtung gemäß Anspruch 2, wobei der Bremshebel (3) einen Kabelbefestigungsteil (9) aufweist und wobei die erste Stelle sich zwischen dem Kabelbefestigungsteil (9) und der zweiten Stelle befindet.

4. Bremsbetätigungsvorrichtung gemäß einem der Ansprüche 2 oder 3, wobei der Ausrücker (15) sich zwischen der ersten Stelle und der zweiten Stelle befindet.

5. Bremsbetätigungsvorrichtung gemäß einem der Ansprüche 2 bis 4, wobei der Ausrücker (15) bezüglich des Teils (3b) des Bremshebels (3) beweglich montiert ist und eine Berührungsfläche (15a) aufweist, deren Form sich verändert, so daß der Teil (3b) des Bremshebels (3) die Berührungsfläche (15a) je nach der relativen Position des Ausrückers (15) bei verschiedenen Positionen berührt.

6. Bremsbetätigungsvorrichtung gemäß einem der Ansprüche 2 bis 5, wobei das Einstellmittel (20) eine außen angebrachte Betätigungskomponente (19) aufweist, die mit dem Ausrücker verbunden ist.

7. Bremsbetätigungsvorrichtung gemäß Anspruch 6, wobei der Ausrücker (15) drehbar am Drehteil (7) montiert ist, wobei die Betätigungskomponente (19) drehbar am Befestigungsteil (2) montiert ist und wobei des Einstellmittel (20) weiterhin einen ersten Gang (16), der am Ausrücker (15) befestigt ist, um sich mit diesem zu drehen, und einen zweiten Gang (18), der an der Betätigungskomponente (19) befestigt ist, um sich mit dieser zu drehen, beinhaltet.

8. Bremsbetätigungsvorrichtung gemäß Anspruch 7, wobei der erste Gang (16) direkt in den zweiten Gang (18) eingreift.

9. Bremsbetätigungsvorrichtung gemäß Anspruch 1, wobei der Bremshebel (3) bei einer Befestigungsstelle (22) am Befestigungsteil (2) montiert ist und ausgerichtet ist, um sich um die Befestigungsstelle zu drehen und bezüglich der Befestigungsstelle zu bewegen, wobei das Widerstandsmittel (17) einen Ausrücker (25) und einen Teil des Bremshebels (3) der zur Berührung des Ausrückers (25) ausgeführt ist, beinhaltet, wobei der Ausrücker (25) so angeordnet ist, daß sich der Bremshebel (3) um die Befestigungsstelle dreht, bis der Teil des Bremshebels (3) den Ausrücker (25) berührt und der Hebel (3) sich dann um den Berührungspunkt zwischen dem Teil (3b) des Bremshebels (3) und des Ausrückers (5) dreht.

10. Bremsbetätigungsvorrichtung gemäß Anspruch 9, wobei der Ausrücker (25) einen Gewindestab enthält und wobei das Einstellmittel (20) einen Gewindeteil des Gewindestabs beinhaltet.

11. Bremsbetätigungsvorrichtung gemäß einem der Ansprüche 9 oder 10, wobei der Bremsbetätigungshebel (3) einen Kabelbefestigungsteil (9) aufweist und wobei die Befestigungsstelle sich zwischen dem Kabelbefestigungsteil (9) und dem Ausrücker (25) befindet.

12. Bremsbetätigungsvorrichtung gemäß Anspruch 11, wobei eine feststehende Drehachse (21) am Bremshebel (3) montiert ist, wobei die feststehende Drehachse (21) in einem Schlitz (22) angebracht ist, der im Befestigungsteil (2) bei der Befestigungsstelle gebildet ist, so daß sich der Bremshebel (3) um die feststehende Drehachse (21) dreht, bis der Teil des Bremshebels (3) den Ausrücker (25) berührt und danach bewegt sich die feststehende Drehachse (21) innerhalb des Schlitzes (22).

13. Bremsbetätigungsvorrichtung gemäß einem der Ansprüche 11 oder 12, weiters bestehend aus einem Hinlenkmittel (23), das zwischen dem Bremshebel (3), oder der daran befestigten feststehenden Drehachse (21), und dem Befestigungsteil (2) angebracht ist, um den Widerstand gegen die Bewegung des Bremshebels (3) weiter zu erhöhen, wenn der Bremshebel (3) sich um den Berührungspunkt zwischen dem Teil des Bremshebels (3) und dem Ausrücker (25) dreht.

14. Bremsbetätigungsvorrichtung gemäß Anspruch 1, wobei das Widerstandsmittel folgendes beinhaltet:
eine gestufte Fläche (27a, 27b, 27c); und
einen Eingriffsteil (31), der sich entlang der gestuften Fläche (27a, 27b, 27c) bewegt, wenn der Bremshebel (3) bewegt wird, so daß eine Stufe (27b) einer weiteren Bewegung des Bremshebels (3) widersteht.

15. Bremsbetätigungsvorrichtung gemäß Anspruch 14, weiterhin bestehend aus einem beweglichen Teil (30), der beweglich mit dem Befestigungsteil (2) verbunden ist und den Eingriffsteil (31) stützt, so daß der bewegliche Teil (30) sich bewegt, wenn der Eingriffsteil sich entlang der gestuften Fläche (27a, 27b, 27c) bewegt.

16. Bremsbetätigungsvorrichtung gemäß Anspruch 14 oder 15, wobei der Bremshebel (3) drehbar bei einer Befestigungsstelle (26) mit dem Befestigungsteil (2) verbunden ist, so daß ein Greifteil des Bremshebels (3) sich von der Befestigungsstelle (26) erstreckt und ein Ansatz, der eine erste Nockenfläche (27a) bildet, radial von der Befestigungsstelle (26) verläuft, und wobei die gestufte Fläche (27a, 27b, 27c) sich auf dem Ansatz des Bremshebels (3) befindet.

17. Bremsbetätigungsvorrichtung gemäß Anspruch 16, wobei das Einstellmittel einen Nockenteil (28) enthält, der bezüglich des Ansatzes (27a) drehbar montiert ist und eine zweite Nockenfläche (27c) aufweist, die weiter hinausragt als die erste Nockenfläche (27a), um die Stufe (27b) zu bilden, wobei eine Position des Nockenteils (28) die Position der Stufe (27b) und dadurch die vorgegebene Position des Bremshebels (3), bei welcher der Widerstand leicht erhöht wird, bestimmt.

18. Bremsbetätigungsvorrichtung gemäß einem der vorhergehenden Ansprüche, wobei das Einstellmittel (20) ausgeführt ist, um die vorgegebene Position des Bremshebels (3) auf eine Stelle einzustellen, bevor eine Bremskraft auf ein Rad des Fahrrads ausgeübt wird.

19. Bremsbetätigungsvorrichtung gemäß einem der vorhergehenden Ansprüche, wobei das Einstellmittel (20) ausgeführt ist, um die vorgegebene Position des Bremshebels (3) auf eine Stelle einzustellen, nachdem eine Bremskraft einem Wert (Q) entspricht, bei dem ein Rad des Fahrrads sperrt.

20. Bremsbetätigungsvorrichtung gemäß einem der vorhergehenden Ansprüche, wobei das Einstellmittel (20) ausgeführt ist, um die vorgegebene Position des Bremshebels (3) auf eine Stelle einzustellen, nachdem eine Bremskraft auf ein Rad des Fahrrads ausgeübt wurde, aber bevor eine Bremskraft einem Wert (Q) entspricht, bei dem ein Rad des Fahrrads sperrt.

## Revendications

1. Un dispositif d'actionnement de frein pour une bicyclette comprenant :
une manette de frein (3) destinée à être montée de façon à pivoter sur un élément de montage (2) ; un moyen de résistance (17), disposé entre la manette de frein (3) et l'élément de montage (2), pour augmenter de façon discrète la résistance au déplacement de la manette de frein (3) lorsque la manette de frein (3) se déplace vers une position prédéterminée ; et un moyen de réglage (20) pour régler la position prédéterminée de la manette de frein (3) à laquelle la résistance augmente de façon discrète, caractérisé en ce que le moyen de résistance (17) empêche que la manette de frein (3) ne se déplace plus avant jusqu'à ce qu'une force donnée (C) soit appliquée à la manette de frein (3).

2. Un dispositif d'actionnement de frein selon la revendication 1 dans lequel le moyen de résistance comprend :
un élément de pivot (7) accouplé de façon à pivoter à la manette de frein (3) en un premier emplacement et à l'élément de montage (2) en un second emplacement ;
une butée (15) disposée entre l'élément de pivot et la manette de frein (3) ; et
une portion (3b) de la manette de frein (3) pour entrer en contact avec la butée (15) lorsque la manette de frein (3) pivote autour du premier emplacement.

3. Un dispositif d'actionnement de frein selon la revendication 2 dans lequel la manette de frein (3) comprend une portion de fixation de câble (9), et dans lequel le premier emplacement est situé entre la portion de fixation de câble (9) et le second emplacement.

4. Un dispositif d'actionnement de frein selon l'une ou l'autre des revendications 2 ou 3 dans lequel la butée (15) est disposée entre le premier emplacement et le second emplacement.

5. Un dispositif d'actionnement de frein selon une quelconque des revendications 2 à 4 dans lequel la butée (15) est montée de façon à pouvoir se déplacer par rapport à la portion (3b) de la manette de frein (3) et comprend une surface de contact (15a) dont la configuration varie de sorte que la portion (3b) de la manette de frein (3) entre en contact avec la surface de contact (15a) à des positions différentes suivant la position relative de la butée (15).

6. Un dispositif d'actionnement de frein selon n'importe laquelle des revendications 2 à 5 dans lequel le moyen de réglage (20) comprend un organe d'actionnement disposé de façon externe (19) accouplé à la butée.

7. Un dispositif d'actionnement de frein selon la revendication 6 dans lequel la butée (15) est montée de façon à pivoter sur l'élément de pivot (7), dans lequel l'organe d'actionnement (19) est monté de façon à pivoter sur l'élément de montage (2), et dans lequel le moyen de réglage (20) comprend de plus un premier engrenage (16) monté sur la butée (15) pour tourner avec celle-ci et un second engrenage (18) monté sur l'organe d'actionnement (19) pour tourner avec celui-ci.

8. Un dispositif d'actionnement de frein selon la revendication 7 dans lequel le premier engrenage (16) s'engrène directement dans le second engrenage (18).

9. Un dispositif d'actionnement de frein selon la revendication 1 dans lequel la manette de frein (3) est montée sur l'élément de montage (2) en un emplacement de montage (22) et est adaptée à la fois pour pivoter autour de l'emplacement de montage et pour se déplacer par rapport à l'emplacement de montage, dans lequel le moyen de résistance (17) comprend une butée (25) et une portion de la manette de frein (3) adaptée pour entrer en contact avec la butée (25), dans lequel la butée (25) est située de façon à ce que la manette de frein (3) pivote autour de l'emplacement de montage jusqu'à ce que la portion de la manette de frein (3) entre en contact avec la butée (25), et que par la suite la manette (3) pivote autour du point de contact entre la portion (3b) de la manette de frein (3) et la butée (5).

10. Un dispositif d'actionnement de frein selon la revendication 9 dans lequel la butée (25) consiste en une tige filetée, et dans lequel le moyen de réglage (20) consiste en une portion filetée de la tige filetée.

11. Un dispositif d'actionnement de frein selon l'une ou l'autre des revendications 9 ou 10 dans lequel la manette de frein (3) comprend une portion de fixation de câble (9), et dans lequel l'emplacement de montage est situé entre la portion de fixation de câble (9) et la butée (25).

12. Un dispositif d'actionnement de frein selon la revendication 11 dans lequel un boulon d'articulation (21) est monté sur la manette de frein (3), le boulon d'articulation (21) étant disposé à l'intérieur d'une fente (22) pratiquée à l'intérieur de l'élément de montage (2) à l'emplacement de montage de sorte que la manette de frein (3) pivote autour du boulon d'articulation (21) jusqu'à ce que la portion de la manette de frein (3) entre en contact avec la butée (25), et que par la suite le boulon d'articulation (21) se déplace à l'intérieur de la fente (22).

13. Un dispositif d'actionnement de frein selon l'une ou l'autre des revendications 11 ou 12 comprenant de plus un moyen de décalage (23) disposé entre la manette de frein (3), ou le boulon d'articulation (21) qui y est fixé, et l'élément de montage (2) pour augmenter plus encore la résistance au déplacement de la manette de frein (3) lorsque la manette de frein (3) pivote autour du point de contact entre la portion de la manette de frein (3) et la butée (25).

14. Un dispositif d'actionnement de frein selon la revendication 1 dans lequel le moyen de résistance comprend :
une surface échelonnée (27a, 27b, 27c) ; et
un élément d'engrenage (31), lequel se déplace le long de la surface échelonnée (27a, 27b, 27c) tandis que l'on déplace la manette de frein (3) de sorte qu'un échelon (27b) s'oppose au déplacement supplémentaire de la manette de frein (3).

15. Un dispositif d'actionnement de frein selon la revendication 14 comprenant de plus un élément déplaçable (30) accouplé à l'élément de montage (2) de façon à pouvoir se déplacer et soutenant l'élément d'engrènement (31) de sorte que l'élément déplaçable (30) se déplace tandis que l'élément d'engrènement se déplace le long de la surface échelonnée (27a, 27b, 27c).

16. Un dispositif d'actionnement de frein selon l'une ou l'autre des revendications 14 ou 15 dans lequel la manette de frein (3) est accouplée de façon à pivoter à l'élément de montage (2) en un emplacement de montage (26) de sorte qu'une pièce d'agrippement de la manette de frein (3) s'étend depuis l'emplacement de montage (26) et une pièce de prolongement formant une première surface de came (27a) s'étend de façon radiale depuis l'emplacement de montage (26), et dans lequel la surface échelonnée (27a, 27b, 27c) est disposée sur la pièce de prolongement de la manette de frein (3).

17. Un dispositif d'actionnement de frein selon la revendication 16 dans lequel le moyen de réglage comprend un élément de came (28) monté de façon à pivoter par rapport à la pièce de prolongement (27a) et possédant une seconde surface de came (27c), laquelle s'étend plus loin que la première surface de came (27a) pour former l'échelon (27b), dans lequel une position de l'élément de came (28) détermine la position de l'échelon (27b) et par là la position prédéterminée de la manette de frein (3) à laquelle la résistance augmente de façon discrète.

18. Un dispositif d'actionnement de frein selon n'importe quelle revendication précédente dans lequel le moyen de réglage (20) est adapté pour régler la position prédéterminée de la manette de frein (3) à un emplacement avant qu'une force de freinage soit appliquée à une roue de la bicyclette.

19. Un dispositif d'actionnement de frein selon n'importe quelle revendication précédente dans lequel le moyen de réglage (20) est adapté pour régler la position prédéterminée de la manette de frein (3) en un emplacement après une force de freinage égale à une valeur (Q) à laquelle une roue de la bicyclette se bloque.

20. Un dispositif d'actionnement de frein selon n'importe quelle revendication précédente dans lequel le moyen de réglage (20) est adapté pour régler la position prédéterminée de la manette de frein (3) en un emplacement après qu'une force de freinage soit appliquée à une roue de la bicyclette mais avant qu'une force de freinage égale à une valeur (Q) à laquelle une roue de la bicyclette se bloque soit appliquée.
